(19) Europäisches Patentamt
European Patent Office
Office européen des brevets

(11) EP 0 934 989 B1

(12) EUROPÄISCHE PATENTSCHRIFT

(45) Veröffentlichungstag und Bekanntmachung des Hinweises auf die Patenterteilung:
**18.06.2003 Patentblatt 2003/25**

(51) Int Cl.⁷: **C09D 183/06**, C09K 19/40, C09D 183/14

(21) Anmeldenummer: **98124845.3**

(22) Anmeldetag: **30.12.1998**

(54) **Beschichtungsmaterial auf der Basis von flüssigkristallinen anorganisch-organischen Hybridpolymeren**

Coating material on the basis of liquid crystalline inorganic-organic hybrid polymers

Compositions de rêvetement à base de polymères hybride inorganique-organique

(84) Benannte Vertragsstaaten:
**AT BE CH DE ES FI FR GB IT LI NL SE**

(30) Priorität: **04.02.1998 DE 19804388**

(43) Veröffentlichungstag der Anmeldung:
**11.08.1999 Patentblatt 1999/32**

(73) Patentinhaber: **FRAUNHOFER-GESELLSCHAFT ZUR FÖRDERUNG DER ANGEWANDTEN FORSCHUNG E.V.**
**80636 München (DE)**

(72) Erfinder:
- **Amberg-Schwab, Sabine Dr.**
  **97250 Erlabrunn (DE)**
- **Hoffmann, Manfred Dipl.-Chem.**
  **97074 Würzburg (DE)**

(74) Vertreter: **Pfenning, Meinig & Partner**
**Mozartstrasse 17**
**80336 München (DE)**

(56) Entgegenhaltungen:
**EP-A- 0 066 137**
**EP-A- 0 819 743**
**DE-A- 4 303 570**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

EP 0 934 989 B1

## Beschreibung

Anorganisch-organische Hybridpolymere sind seit etwa 1980 bekannt. Der prinzipielle Aufbau dieser Materialien leitet sich von der Netzwerkstruktur des Kieselglases mit Si-O-Si-Bindungen ab. Die Synthese erfolgt im Sol-Gel-Prozeß über die gesteuerte Hydrolyse und Kondensation von Alkoxysilanen. Werden zusätzlich Metallalkoxide in den Sol-Gel-Prozeß einbezogen, so läßt sich das silicatische Netzwerk gezielt modifizieren.

Durch Polymerisation von organofunktionellen Gruppen, welche durch Organoalkoxysilane in das Material eingebracht werden, kann zusätzlich ein organisches Netzwerk aufgebaut werden. So können reaktive Meth-acrylat-, Epoxy- oder vinylgruppen durch thermische bzw. photochemische Induktion polymerisiert werden.

Die DE 43 03 570 beschreibt Hybridpolymere, die auch als ORMOCERe® bezeichnet werden.

In anorganisch-organischen Hybridpolymeren können aufgrund ihrer strukturellen Variationsbreite eine Reihe von verschiedenen Materialeigenschaften eingestellt und kombiniert werden (z.B.: Abriebbeständigkeit, Korrosionsschutzeigenschaften, Barriereeigenschaften usw.). Barriereeigenschaften von anorganisch-organischen Hybridpolymeren wurden hinsichtlich der Permeation von Kohlenwasserstoffen von verschiedenen Aromastoffen, von Sauerstoff und von Wasserdampf untersucht. In allen Fällen konnte eine gute bis sehr gute Sperreigenschaft nachgewiesen werden (S. Amberg-Schwab, M. Hoffmann, H. Bader: "Kunststoffe 86", 1996, 5, S. 660-664).

Zu der Gruppe der flüssigkristallinen Verbindungen gehören etwa 3000 organische Verbindungen, denen man aufgrund ihrer charakteristischen Eigenschaften einen eigenen Aggregatzustand zuordnet. Die Phänomene der flüssigkristallinen Verbindungen wurden bereits 1888 am Cholesterinbenzoat beobachtet, das bei 145,5 °C zwar schmolz aber wolkig trübe blieb. Erst bei 178,5 °C wurde die Schmelze schlagartig klar. Beim Abkühlen traten die Effekte in umgekehrter Reihenfolge auf (Mannschreck: "Chemiker-Zeitung 92", 1968, S. 69-72).

Flüssigkristalline Verbindungen sind seit 1904 im Handel, doch sind ihre Strukturprinzipien erst viel später erkannt worden. Thermotrope flüssigkristalline Verbindungen, die man durch Erwärmen von Kristallen über ihren Schmelzpunkt hinaus erhält, weisen Eigenschaften auf, die zwischen denen des flüssigen und denen des festen Zustandes liegen: sie zeigen die Beweglichkeit der durchweg isotropen Flüssigkeiten und die optische Anisotropie von Kristallen. Während sich in Flüssigkeiten die Moleküle in den drei Raumrichtungen frei bewegen und um drei senkrecht aufeinanderstehende Achsen rotieren können, im festen Zustand dagegen die Moleküle fixiert sind und nicht rotieren können, sind im flüssigkristallinen Zustand die Moleküle zu Translationen befähigt. Beim Übergang kristallin/flüssigkristallin bricht zwar das Kristallgitter zusammen, die Moleküle behalten aber eine Vorzugsrichtung bei; sie richten sich parallel zueinander aus. Ihre optische Anisotropie-Eigenschaft (Trübung infolge Streuung einfallender Lichtstrahlen, Doppelbrechung, Beugungserscheinungen) verlieren Flüssigkristalle erst beim Übergang flüssigkristallin/flüssig.

Flüssigkristalline Polymere (LCP) unterscheiden sich z.B. hinsichtlich ihrer Vernetzungsstrukturen (Backbones). Am meisten verbreitet sind Polymere mit Acrylat-, Methacrylat- und Siloxanhauptketten. Ein Überblick über derartige Verbindungen ist angegeben in Gray, G.W.: Synthesis and properties of side chain liquid crystal polysiloxanes, in "Side Chain Liquid Crystal Polymers", 1992, S. 106-129.

Nachteilig bei den flüssigkristallinen Polymeren (LCP) des Standes der Technik ist jedoch, daß diese zwar verbesserte Barriereeigenschaften, insbesondere gegenüber Sauerstoff, im Verhältnis zu nicht flüssigkristallinen Polysiloxanen aufweisen, die Barriereeigenschaften aber für viele Anwendungsfälle nicht ausreichend sind. Auch sind die mit diesen LCP beschichteten Substrate in Bezug auf die physikalischen Eigenschaften, hier insbesondere in Bezug auf die Kratzfestigkeit, noch nicht befriedigend.

Ausgehend hiervon ist es jedoch die Aufgabe der vorliegenden Erfindung, neue Beschichtungsmaterialien vorzuschlagen, die neben guten Barriereeigenschaften auch auf den Substraten eine gute Haftung und eine ausgezeichnete Abrieb- und Kratzbeständigkeit aufweisen.

Die Aufgabe wird durch die kennzeichnenden Merkmale des Anspruchs 1 gelöst. Die Unteransprüche zeigen vorteilhafte Weiterbildungen auf.

Die erfindungsgemäßen Beschichtungsmaterialien bestehen demnach aus einem Cokondensat von sogenannten ORMOCER-Solen bzw. deren Ausgangssilanen mit mesogenen, hydrolysierbaren Silanen und/oder Polysiloxanen. Überraschenderweise hat es sich gezeigt, daß Beschichtungsmaterialien, die auf diese Weise hergestellt werden, deutlich bessere Barriereeigenschaften aufweisen, als sie bisher von flüssigkristallinen Polysiloxanen (z.B. D. Chen, G. Hsiue; Makromol. Chem. 192; 2021-2029; 1981), bzw. herkömmlichen ORMOCER-Systemen (siehe Tabelle 1) bekannt waren. Besonders hervorzuheben bei dem erfindungsgemäßen Beschichtungsmaterial ist weiterhin, daß nicht nur die Barriereeigenschaften, z.B. gegenüber Sauerstoff oder Wasserdampf, deutlich verbessert worden sind, sondern daß gleichzeitig die an und für sich von ORMOCERen® her bekannten Eigenschaften, nämlich ausgezeichnete Haftung auf verschiedenen Substraten, gute Abrieb- und Kratzbeständigkeit, gleichfalls erhalten geblieben sind. Das erfindungsgemäße Beschichtungsmaterial verbindet somit die Vorteile der Flüssigkristalle mit den Vorteilen der ORMOCERe®-Beschichtungen. Durch die Cokondensation ist besonders vorteilhaft, daß eine kovalente Anbindung der mesogenen Moleküle an das silicatische Netzwerk der anorganischen-organischen Hybridpolymere erreicht wird. Die kovalente Anbindung der mesogenen Moleküle ist insbesondere für Barrierematerialien sehr wichtig, da sonst

eine Ausbildung von Grenzflächen zwischen ORMOCER®-Matrix und flüssigkristallinen Molekülen zusätzliche Diffusionskanäle für die Permeation schaffen könnte.

Bei den mesogenen, hydrolysierbaren Silanen/Polysiloxanen sind insbesondere die nach der allgemeinen Formel I

$$R_{3-m}R''_mSi\text{-}(CH_2\text{-}CH_2\text{-}CH_2)_n\text{-}X \qquad (I)$$

und der allgemeinen Formel II

$$R_{2-o}R''_oYSiO\text{-}(SiMeY\text{-}O)_p\text{-}SiYR_{2-o}R''_o \qquad II$$

bevorzugt. In den allgemeinen Formeln I und II bedeuten R = hydrolysierbare Gruppe wie Wasserstoff, Halogen, Alkoxy, Acyloxy, Alkylcarbonyl, Alkoxycarbonyl, oder $NR'_2$, mit R' = Wasserstoff, Alkyl oder Aryl.
R'' ist ein $C_1$ - $C_{20}$ Methyl, geradkettig oder verzweigt, bevorzugt Methyl oder Ethyl.
X = mesogener Molekülrest, Y = $-CH_2-CH_2-(CH_2)_n-X$, m = 0-2, n = 1-25, o = 0 oder 1, p = 0-500.

Die mesogenen Molekülreste, die für das erfindungsgemäße Beschichtungsmaterial geeignet sind, sind an und für sich aus dem Stand der Technik bekannt. Ein Überblick hierüber ist z.B. in der DE 31 19 459 enthalten. Besonders geeignete mesogene Molekülreste sind: Derivate des Cyclohexans, wie Cyclohexylcarbonsäurephenylester, Cyclohexylphenylester, Cyclohexylphenylether, Cyclohexylbenzole, Cyclohexylcarbonsäurecyclohexylester, Dicyclohexylderivate, Derivate des Stilbens, Derivate des Benzoesäurephenylesters, Benzylidenaniline, Derivate des Azobenzols, Derivate des Azoxybenzols, Alkyl- und Alkoxyderivate des Biphenyls, Schiff'sche Basen, Steroide, wie Derivate des Cholesterins und des Cholestans.

Die Synthese der mesogenen, hydrolysierbaren Silane/-Polysiloxane für den Sol-Gel-Prozeß erfolgt durch Hydrosilylierung von olefinischen Gruppen mesogener Moleküle mit hydrolysierbaren Si-H-Silanen bzw. Polysiloxanen nach folgendem Schema:

1) $R_{3-m}R''_mSi\text{-}H + CH_2\text{=}CH\text{-}(CH_2)_{n-2}\text{-}X \text{ --->}$

$$R_{3-m}R''_mSi\text{-}(CH_2\text{-}CH_2\text{-}CH_2)_n\text{-}X$$

2) $R_{2-o}R''_oHSiO\text{-}(SiMeH\text{-}O)_p\text{-}SiHR_{2-o}R''_o + (p+2)CH_2\text{=}CH\text{-}(CH_2)_n\text{-}X \text{ --->}$

$$R_{2-o}R''_oYSiO\text{-}(SiMeY\text{-}O)_p\text{-}SiYR_{2-o}R''_o$$

Die flüssigkristallinen anorganisch-organischen Hybridpolymere (ORMOCERe) werden durch Cokondensation von mesogenen, hydrolysierbaren Silanen/Polysiloxanen mit ORMOCER-Solen bzw. deren Ausgangssilanen erhalten. Bei den ORMOCERen sind insbesondere die in der DE 43 03 570 A1 beschriebenen bevorzugt. Weitere geeignete Beispiele sind in der DE 38 28 098 und der DE 40 25 215 A1 enthalten. Auf diese Offenbarungsgehalte wird deshalb ausdrücklich Bezug genommen.

Es gibt hierbei verschiedene Möglichkeiten der Cokondensation:

- Vorhydrolyse und -kondensation des mesogenen, hydrolysierbaren Silans/Polysiloxans und Zugabe zum ORMOCER-Sol,
- Vorhydrolyse und -kondensation des mesogenen. hydrolysierbaren Silans/Polysiloxans, Zugabe zu den ORMOCER-Ausgangssilanen und anschließender Sol-Gel-Prozeß,
- Zugabe des mesogenen, hydrolysierbaren Silans/-Polysiloxans zum ORMOCER-Sol und anschließende Cokondensation,
- Zugabe des mesogenen, hydrolysierbaren Silans/-Polysiloxans zu den ORMOCER-Ausgangssilanen und anschließender Sol-Gel-Prozeß.

Um flüssigkristalline ORMOCER-Schichten herzustellen, werden die transparenten, klaren Sole - analog den herkömmlichen ORMOCERen - durch gebräuchliche Applikationstechniken (Schleudern, Rakeln, Walzen, ...) auf die Beschichtungsträger aufgebracht. Die Lackfilme werden dann - analog den herkömmlichen ORMOCERen - thermisch

oder photochemisch ausgehärtet.

Eine kovalente Anbindung der mesogenen Moleküle über poymerisierbare, organische Gruppen an das organische Netzwerk der ORMOCERe ist ebenfalls denkbar. Auch kovalente Anbindungen der mesogenen Moleküle an gleichzeitig beide Netzwerke der ORMOCERe (sowohl das organische als auch das anorganische) sind somit prinzipiell möglich.

Neben dem Einsatz als Barriereschichten sind flüssigkristalline ORMOCERe prinzipiell auch für andere Anwendungen einsetzbar, in welchen flüssigkristalline Materialeigenschaften erforderlich sind. Denkbar sind hier beispielsweise Schichten mit ferroelektrischen, optosensorischen, thermotropen oder nicht-linear optischen Eigenschaften. Natürlich sind auch Anwendungen denkbar, bei welchen typische ORMOCER- und flüssigkristalline Eigenschaften gewünscht sind. Aufgrund der Schmelzbarkeit flüssigkristalliner ORMOCER-Systeme ist auch eine Anwendung im Bereich von Pulverlacken denkbar.

Die Erfindung wird nachfolgend durch die Ausführungsbeispiele 1 bis 5 näher erläutert.

Zur Herstellung der Ausführungsbeispiele 1 bis 5 wurden die mesogenen, hydrolysierbaren Silane 1, 2, 3 und 4 verwendet.

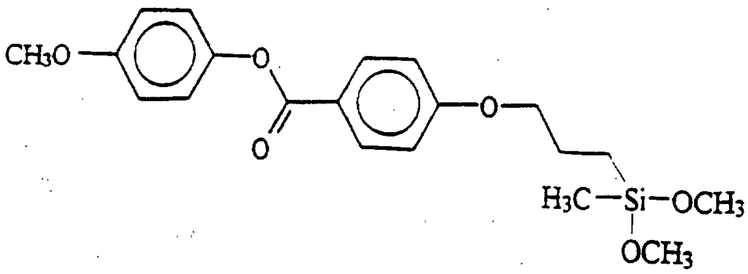

$C_{20}H_{26}O_6Si$
390.50

**Silan 1**

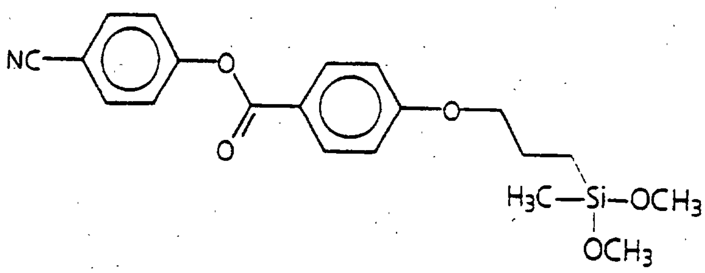

$C_{20}H_{23}NO_5Si$
385.49

**Silan 2**

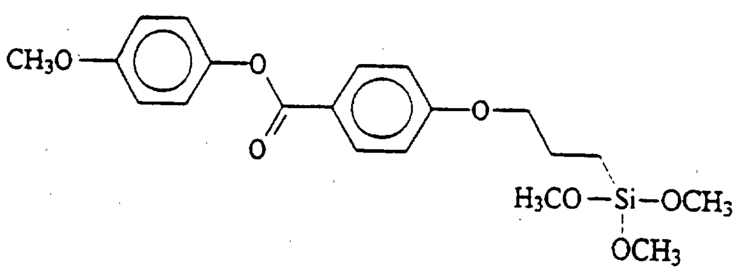

$C_{20}H_{26}O_7Si$
406.50

**Silan 3**

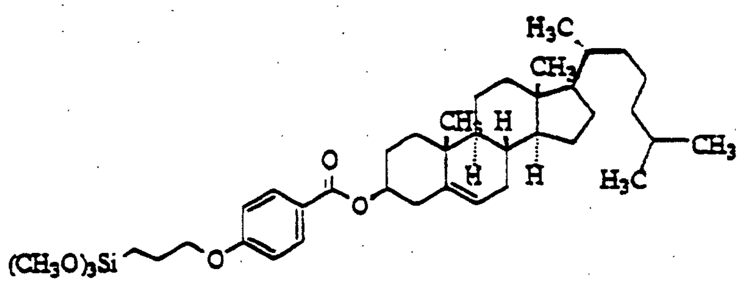

C40H64O6Si
669.03

Silan 4

**Beispiel 1**

1,80 g (7,50 mmol) 3-Glycidoxypropyltrimethoxysilan (GLYMO), 0,03 g (0,38 mmol) N-Methylimidazol und 10,0 g (150 mmol) **Silan 4** werden in 50 ml Tetrahydrofuran gelöst. Zur klaren Lösung gibt man 0,90 g (51,0 mmol) 0,1 HCl-Lösung und rührt 24 Stunden bei 25 °C. Anschließend wird durch einen Filter (Porengröße 0,45 µm) filtriert und das Lösungsmittel bei Normaldruck abdestilliert.

**Beispiel 2**

2,36 g (10,0 mmol) 3-Glycidoxypropyltrimethoxysilan (GLYMO), 0,04 g (0,50 mmol) N-Methylimidazol und 0,27 g (15 mmol) Wasser werden bei Raumtemperatur 3 h gerührt. Nach Zugabe von 1,52 g (5,00 mmol) (3-Triethoxypropyl-)bernsteinsäureanhydrid wird die klare Lösung eine weitere Stunde gerührt. Nun gibt man 20,1 g (30,0 mmol) **Silan 4** in 100 ml THF zu und rührt nach Zugabe von 1,53 g (85,0 mmol) 24 Stunden bei Raumtemperatur. Anschließend wird durch einen Filter (Porengröße: 0,45 µm) filtriert und das Lösungsmittel bei Normaldruck abdestilliert.
Das hochviskose Harz wird mit einem Spiralrakel (50 µm) auf PA6-Folie aufgerakelt. Die Schicht wird 3 h bei 130 °C ausgehärtet.

**Beispiel 3**

Sol 1: 1,00 g (2,46 mmol) **Silan 3** werden in 10,0 g Essigester gelöst und mit 0,13 g (7,38 mmol) 0,1 N HCl versetzt. Die Lösung wird 24 h bei Raumtemperatur gerührt.
Sol 2: Es wird ein Sol hergestellt aus 30 Mol% Tetramethoxysilan, 45 Mol% 3-Glycidoxypropyltrimethoxysilan, 5 Mol% 3-Aminopropyltriethoxysilan, 10 Mol% Aluminium-tri-sec.butoxid und 10 Mol% Zirkontetrapropoxid. Zur Hydrolyse werden insgesamt pro Mol hydrolysierbarer Alkoxyrest ein Mol Wasser verwendet. Die Hydrolysedauer beträgt bei Raumtemperatur 2 h.
0,5 g von Sol 2 werden langsam unter Eiskühlung zu Sol 1 getropft. Anschließend wird durch einen Filter (Porengröße: 0,45 µm) filtriert und das Lösungsmittel bei Normaldruck abdestilliert.
Das hochviskose Harz wird mit einem Spiralrakel (50 µm) auf PA6-Folie aufgerakelt. Die Schicht wird 3 h bei 130 °C ausgehärtet.

**Beispiel 4**

Sol 1: 1,00 g (2,56 mmol) **Silan 1** werden in 10,0 g Essigester gelöst und mit 0,10 g (5,12 mmol) 0,1 N HCl versetzt. Die Lösung wird 24 h bei Raumtemperatur gerührt.
Sol 2: Es wird ein Sol hergestellt aus 30 Mol% Tetramethoxysilan, 45 Mol% 3-Glycidoxypropyltrimethoxysilan, 5 Mol% 3-Aminopropyltriethoxysilan, 10 Mol% Aluminium-tri-sec.butoxid und 10 Mol% Zirkontetrapropoxid. Zur Hydrolyse werden insgesamt pro Mol hydrolysierbarer Alkoxyrest ein Mol Wasser verwendet. Die Hydrolysedauer beträgt bei Raumtemperatur 2 h.
0,5 g von Sol 2 werden langsam unter Eiskühlung zu Sol 1 getropft. Anschließend wird durch einen Filter (Porengröße: 0,45 µm) filtriert und das Lösungsmittel bei Normaldruck abdestilliert.
Das hochviskose Harz wird mit einem Spiralrakel (50 µm) auf PA6-Folie aufgerakelt. Die Schicht wird 3 h bei

130 °C ausgehärtet.

**Beispiel 5**

Sol 1: 1,00 g (2,58 mmol) **Silan 2** werden in 10,0 g Essigester gelöst und mit 0,09 g (5,18 mmol) 0,1 N HCl versetzt. Die Lösung wird 24 h bei Raumtemperatur gerührt.

Sol 2: Es wird ein Sol hergestellt aus 30 Mol% Tetramethoxysilan, 45 Mol% 3-Glycidoxypropyltrimethoxysilan, 5 Mol% 3-Aminopropyltriethoxysilan, 10 Mol% Aluminium-tri-sec.butoxid und 10 Mol% Zirkontetrapropoxid. Zur Hydrolyse werden insgesamt pro Mol hydrolysierbarer Alkoxyrest ein Mol Wasser verwendet. Die Hydrolysedauer beträgt bei Raumtemperatur 2 h.

0,5 g von Sol 2 werden langsam unter Eiskühlung zu Sol 1 getropft. Anschließend wird durch einen Filter (Porengröße: 0,45 μm) filtriert und das Lösungsmittel bei Normaldruck abdestilliert.

Das hochviskose Harz wird mit einem Spiralrakel (50 μm) auf PA6-Folie aufgerakelt. Die Schicht wird 3 h bei 130 °C ausgehärtet.

Tabelle 1 zeigt die Wasserdampfdurchlässigkeit der Ausführungsbeispiele 1 bis 5 bei 23 °C und 85 % relativer Feuchte.

Tabelle I

| Probe | [g/m$^2$ d] |
|---|---|
| Polyamid 6 unbeschichtet (70 μm) | 23,0 |
| Polyamid 6 + ORMOCER-Beschichtung Bsp. 4 Sol. 2 (8 μm) | 20,0 |
| Polyamid 6 + Ausfüh-rungsbeispiel 1 (25 μm) | 5,9 |
| Polyamid 6 + Ausfüh-rungsbeispiel 2 (20 μm) | 6,1 |
| Polyamid 6 + Ausfüh-rungsbeispiel 3 (25 μm) | 6,9 |
| Polyamid 6 + Ausfüh-rungsbeispiel 4 (25 μm) | 6,4 |
| Polyamid 6 + Ausfüh-rungsbeispiel 5 (25 μm) | 5,8 |

**Patentansprüche**

1. Beschichtungsmaterial auf der Basis von flüssigkristallinen Polysiloxanen,
**dadurch gekennzeichnet,**
**daß** sie durch Cokondensation von mesogenen, hydrolysierbaren Silanen und/oder Polysiloxanen mit Solen, hergestellt durch hydrolytische Kondensation mindestens eines vernetzbaren organofunktionellen Silans, ggf. in Anwesenheit eines Kondensationskatalysators und/oder Additives, erhalten worden sind.

2. Beschichtungsmaterial nach Anspruch 1,
**dadurch gekennzeichnet, daß** das mesogene, hydrolysierbare Silan durch die allgemeine Formel I

$$R_{3-m}R''_mSi\text{-}(CH_2\text{-}CH_2\text{-}CH_2)_n\text{-}X \qquad (I)$$

bestimmt ist, worin

R = hydrolysierbare Gruppen wie Wasserstoff, Halogen, Alkoxy, Acyloxy Alkylcarbonyl, Alkoxycarbonyl, oder $NR'_2$, mit
R' = Wasserstoff, Alkyl oder Aryl
R''= $C_1$ - $C_{20}$ Alkyl verzweigt oder geradkettig bevorzugt Methyl oder Ethyl
X = mesogener Molekülrest
m = 0 - 2
n = 1 - 25

ist.

**3.** Beschichtungsmaterial nach Anspruch 1,
**dadurch gekennzeichnet, daß** das mesogene, hydrolysierbare Polysiloxan durch die allgemeine Formel II

$$R_{2-o}R''_oYSiO\text{-}(SiMeY\text{-}O)_p\text{-}SiYR_{2-o}R''_o \qquad II$$

bestimmt ist, worin die Reste R und R'' die in Anspruch 1 angegebene Bedeutung besitzen und

Y= $-CH_2-CH_2(CH_2)_n-X$
X = mesogener Molekülrest
o = 0 oder 1
p = 0 - 500

ist.

**4.** Beschichtungsmaterial nach mindestens einem der Ansprüche 1 bis 3,
**dadurch gekennzeichnet, daß** der mesogene Molekülrest X ausgewählt ist aus Derivaten des Cyclohexans, wie Cyclohexylcarbonsäurephenylester, Cyclohexylphenylester, Cyclohexylphenylether, Cyclohexylbenzole, Cyclohexylcarbonsäurecyclohexylester, Dicyclohexylderivate, Derivate des Stilbens, Derivate des Benzoesäurephenylesters, Benzylidenaniline, Derivate des Azobenzols, Derivate des Azoxybenzols, Alkyl- und Alkoxyderivate des Biphenyls, Schiff'sche Basen, Steroide wie Derivate des Cholesterins und des Cholestans.

**5.** Beschichtungsmaterial nach mindestens einem der Ansprüche 1 bis 4,
**dadurch gekennzeichnet, daß** das Cokondensat erhalten worden ist durch Zugabe von 5 bis 99 Mol-% des mesogenen, hydrolysierbaren Silans und/oder Polysiloxans, hergestellt durch Vorhydrolyse und Kondensation, zu 95 bis 1 Mol-% des Sols.

**6.** Beschichtungsmaterial nach mindestens einem der Ansprüche 1 bis 4,
**dadurch gekennzeichnet, daß** das Cokondensat erhalten worden ist durch Zugabe von 5 bis 95 Mol-% des mesogenen, hydrolysierbaren Silans und/oder Polysiloxans, hergestellt durch Vorhydrolyse und Kondensation, zu 95 bis 1 Mol-% der Ausgangssilane des Sols und einem anschließenden Sol-Gel-Prozeß.

**7.** Beschichtungsmaterial nach mindestens einem der Ansprüche 1 bis 4,
**dadurch gekennzeichnet, daß** das Cokondensat erhalten worden ist durch Zugabe von 5 bis 99 Mol-% des mesogenen, hydrolysierbaren Silans und/oder Polysiloxans zu 95 bis 1 Mol-% des Sols und anschließender Cokondensation.

**8.** Beschichtungsmaterial nach mindestens einem der Ansprüche 1 bis 5,
**dadurch gekennzeichnet, daß** Cokondensat erhalten worden ist durch Zugabe von 5 bis 99 Mol-% des mesogenen, hydrolysierbaren Silans und/oder Polysiloxans zu 95 bis 1 Mol-% den Ausgangssilanen des Sols und anschließendem Sol-Gel-Prozeß.

**9.** Verwendung des Beschichtungsmaterials, hergestellt nach mindestens einem der Ansprüche 1 bis 8, als Barriereschicht.

**10.** Verwendung nach Anspruch 9,
**dadurch gekennzeichnet, daß** die Barriereschicht eine Dicke von 1 bis 50 µm aufweist.

## Claims

**1.** Coating material based on liquid-crystal polysiloxanes,
**characterised in that**
they have been obtained by cocondensation of mesogenic, hydrolysable silanes and/or polysiloxanes with sols produced by hydrolytic condensation of at least one crosslinkable, organo-functional silane, optionally in the presence of a condensation catalyst and/or additive.

**2.** Coating material according to claim 1, **characterised in that** the mesogenic, hydrolysable silane is defined by the general formula I

$$R_{3-m}R''_{m}Si\text{-}(CH_2\text{-}CH_2\text{-}CH_2)_n\text{-}X \qquad (I),$$

wherein

R = hydrolysable groups, such as hydrogen, halogen, alkoxy, acyloxy, alkylcarbonyl, alkoxycarbonyl or $NR'_2$, with
R' = hydrogen, alkyl or aryl
R''= $C_1$ - $C_{20}$ alkyl branched or straight-chained, preferably methyl or ethyl
X = mesogenic moiety
m = 0 - 2
n = 1 - 25.

**3.** Coating material according to claim 1, **characterised in that** the mesogenic, hydrolysable polysiloxane is defined by the general formula II

$$R_{2-o}R''_{o}YSiO\text{-}(SiMeY\text{-}O)_p\text{-}SiYR_{2-o}R''_{o} \qquad II,$$

wherein the groups R and R'' have the meaning given in claim 1 and

Y = $-CH_2-CH_2(CH_2)_n-X$
X = mesogenic moiety
o = 0 or 1
p = 0 - 500.

**4.** Coating material according to at least one of claims 1 to 3,
**characterised in that** the mesogenic moiety X is selected from derivatives of cyclohexane, such as cyclohexylcarboxylic acid phenyl esters, cyclohexyl phenyl esters, cyclohexyl phenyl ethers, cyclohexylbenzenes, cyclohexylcarboxylic acid cyclohexyl esters, dicyclohexyl derivatives, derivatives of stilbene, derivatives of phenyl benzoate, benzylidene anilines, derivatives of azobenzene, derivatives of azoxybenzene, alkyl and alkoxy derivatives of biphenyl, Schiff's bases and steroids such as derivatives of cholesterol and of cholestane.

**5.** Coating material according to at least one of claims 1 to 4,
**characterised in that** the cocondensate has been obtained by adding 5 to 99 mole % of the mesogenic, hydrolysable silane and/or polysiloxane, produced by pre-hydrolysis and condensation, to 95 to 1 mole % of the sol.

**6.** Coating material according to at least one of claims 1 to 4,
**characterised in that** the cocondensate has been obtained by adding 5 to 95 mole % of the mesogenic, hydrolysable silane and/or polysiloxane, produced by pre-hydrolysis and condensation, to 95 to 1 mole % of the starting silanes of the sol and a subsequent sol-gel process.

**7.** Coating material according to at least one of claims 1 to 4,
**characterised in that** the cocondensate has been obtained by adding 5 to 99 mole % of the mesogenic, hydrolysable silane and/or polysiloxane to 95 to 1 mole % of the sol and subsequent cocondensation.

**8.** Coating material according to at least one of claims 1 to 5,
**characterised in that** the cocondensate has been obtained by adding 5 to 99 mole % of the mesogenic, hydrolysable silane and/or polysiloxane to 95 to 1 mole % of the starting silanes of the sol and a subsequent sol-gel process.

**9.** Use of the coating material produced in accordance with at least one of claims 1 to 8 as a barrier layer.

**10.** Use according to claim 9,

**characterised in that** the barrier layer has a thickness of 1 to 50 µm.

## Revendications

1. Matériaux de revêtement à base de polysiloxanes de type cristaux liquides, **caractérisés en ce qu'**ils sont obtenus par co-condensation de silanes et/ou polysiloxanes mésogènes, hydrolysables, avec des sols, préparés par condensation hydrolytique d'au moins un silane organofonctionnel réticulable, éventuellement en présence d'un catalyseur de condensation et/ou d'autres additifs.

2. Matériaux de revêtement selon la revendication 1, **caractérisés en ce que** le silane mésogène, hydrolysable, est défini par la formule générale I :

$$R_{3\text{-}m}R''_mSi\text{-}(CH_2\text{-}CH_2\text{-}CH_2)_n\text{-}X \qquad (I)$$

où

R = radicaux hydrolysables comme hydrogène, halogène, alcoxy, acyloxy, alkylcarbonyle, alcoxycarbonyle ou $NR'_2$, avec
R' = hydrogène, alkyle ou aryle,
R"= alkyle en $C_1$-$C_{20}$ ramifié ou linéaire, de préférence méthyle ou éthyle,
X = reste de molécule mésogène,
m = 0-2,
n = 1-25.

3. Matériaux de revêtement selon la revendication 1, **caractérisés en ce que** le polysiloxane mésogène, hydrolysable, est défini par la formule générale II :

$$R_{2\text{-}o}R''_oYSiO\text{-}(SiMeY\text{-}O)_p\text{-}SiYR_{2\text{-}o}R''_o \qquad (II)$$

où
les radicaux R et R" ont la signification donnée à la revendication 1, et

Y = $-CH_2\text{-}CH_2(CH_2)_n\text{-}X$,
X = résidu de molécule mésogène,
o = 0 ou 1,
p = 0-500.

4. Matériaux de revêtement selon au moins l'une des revendications 1 à 3, **caractérisés en ce que** le résidu X de molécule mésogène est choisi parmi les dérivés du cyclohexane, comme l'ester phénylique de l'acide cyclohexylcarboxylique, le cyclohexylphényléther, le cyclohexylbenzène, l'ester cyclohexylique de l'acide cyclohexylcarboxylique, des dérivés dicyclohexyliques, des dérivés du stilbène, des dérivés de l'ester phénylique de l'acide benzoïque, la benzylidèneaniline, des dérivés de l'azobenzène, des dérivés de l'azoxybenzène, des dérivés alkyliques et alcoxyliques du biphényle, des bases de Schiff, des stéroïdes comme des dérivés du cholestérol et du cholestane.

5. Matériaux de revêtement selon au moins l'une des revendications 1 à 4, **caractérisés en ce que** le co-condensat est obtenu par addition de 5 à 99% en moles de silane et/ou polysiloxane mésogène, hydrolysable, préparé par préhydrolyse et condensation, à 95 à 1% en moles du sol.

6. Matériaux de revêtement selon au moins l'une des revendications 1 à 4, **caractérisés en ce que** le cocondensat est obtenu par addition de 5 à 95% en moles du silane et/ou polysiloxane mésogène, hydrolysable, préparé par préhydrolyse et condensation, à 95 à 1% en moles du silane de départ, du sol et par un processus sol-gel ultérieur.

7. Matériaux de revêtement selon au moins l'une des revendications 1 à 4, **caractérisés en ce que** le cocondensat

est obtenu par addition de 5 à 99% en moles du silane et/ou polysiloxane mésogène, hydrolysable, à 95 à 1% en moles du sol et par co-condensation ultérieure.

**8.** Matériaux de revêtement selon au moins l'une des revendications 1 à 5, **caractérisés en ce que** le cocondensat est obtenu par addition de 5 à 99% en moles du silane et/ou polysiloxane mésogène, hydrolysable, à 95 à 1% en moles du silane de départ, du sol et ensuite, par un processus sol-gel.

**9.** Utilisation d'un matériau de revêtement préparé selon au moins l'une des revendications 1 à 8, à titre de couche barrière.

**10.** Utilisation selon la revendication 9, **caractérisée en ce que** la couche barrière présente une épaisseur de 1 à 50 µm.